# EUROPEAN PATENT SPECIFICATION

(11) **EP 1 840 050 B1**
(45) Date of publication and mention of the grant of the patent: **01.09.2010**
(21) Application number: 06006621.4
(22) Date of filing: 29.03.2006
(51) Int. Cl.: B65G 21/20

(54) **Device for adjusting a railing**
Vorrichtung zum Verstellen einer Schiene
Appareil pour ajuster un rail

(43) Date of publication of application: 03.10.2007
(73) Proprietor: Transmisiones Mecánicas AVE, S.A., 08940 Cornellá de Llobregat (ES)
(72) Inventor: Vera Valero, Ambrosio, 08940 Cornella (ES)
(74) Representative: Grünecker, Kinkeldey, Stockmair & Schwanhäusser Anwaltssozietät

(56) References cited:
- EP-A- 0 953 523
- EP-A- 1 061 015
- WO-A-98/18697
- US-A- 1 732 081
- US-A- 6 003 662

## Description

The present invention relates to an adjustable railing device for adjusting the position of a railing defining a border of a conveying path on which goods, in particular bottles, are conveyed.

In a known generic railing device, a railing is connected to a snap rod being guided by a support. A fixing element, for fixing the snap rod's position relative to the support by engaging circumferential snap grooves of the snap rod, is guided in the support. The fixing element is held in its engagement with a snap groove by means of a spring and can be disengaged by pressing a push button and overcoming the spring load.

Such a kind of adjustable railing device is of a durable construction, but an operator needs to use both hands for adjusting the railing.

US 6,003,662 relates to a side rail support of a conveying path of bottles. The side rail support comprises a hollow cap, which is axially moveable on an upstanding post. Lower wall portions of the hollow cap can be engaged with and disengaged from notches of an elongated arm extending through slots of the hollow cap and the post. A spring urges the hollow cap upwardly so that said lower wall portions are securely held in engagement with the notches so that a movement of said elongated arm is securely prevented.

EP 0 953 523 A2 discloses a clamping member for at least one support pin for belt conveyor components.

It is the object of the present invention to provide, in an easy manner, an adjustable railing device which can be handled easily although it has a good adjustability.

The object of the present invention is solved by an adjustable railing device having the features of independent claim 1.

The operator can adjust the railing's position in the second adjustment position. While doing this, the operator does not need to care about the engagement means, but can concentrate on the adjustment. This provides for an easy and fast adjustment in the second adjustment direction. Nevertheless, an unintended movement of the railing in the first adjustment direction is prevented as the adjustment rod is securely locked in this direction.

Particularly preferable, the adjustment rod may have at least one locking profile by means of which the position of the railing with respect to the support may be adjusted, wherein a fixing element may be provided, which can be in an engagement position in which it is engaged with the locking profile, wherein the support may guide the fixing element, and wherein a holding arrangement may be provided by means of which the fixing element can be arrested in a disengagement position in which it is disengaged from the locking profile of the adjustment rod. If the fixing element is arrested in its disengagement position, an operator can freely carry out the adjustment of the position of the railing. If the desired position of the railing is achieved, the arrestment of the fixing element can be released for allowing the engagement of the fixing element with the locking profile. That is, during the adjustment, the operator does not need to care about the fixing element but can concentrate on the adjustment procedure.

Advantageously, a holding arrangement may be provided, being capable of holding a fixing element in a disengaged position by engaging an abutment surface of the support. Hereby, the arrestment of the fixing element in its disengaged position, can be realized in a surprisingly easy manner.

Preferably, a holding arrangement may be provided being capable of holding a fixing element in a disengaged position in a bayonet-like manner. This makes it possible to carry out the arrestment in a surprisingly easy course of motions.

Favourably, the support may comprise a recess into which a holding arrangement may extend if a fixing element is in an engaged position. By using the recess, the holding arrangement can be brought into a position in which the fixing element is allowed to be, or to come, in its engaged position.

Particularly advantageously, an operation device might be provided for moving a fixing element from an engaged position into a disengaged position, wherein the operation device might be rotatable relative to the support for arresting the fixing element. Hereby, an operator can disengage and arrest the fixing element by using a single device.

Favourably, the operation device might be rotatable relative to the fixing element. The fixing element can hereby maintain its rotational position relative to the support when it is arrested.

Particularly preferable, the adjusting railing device may comprise a signalizing element being in a signalizing position if a fixing element is, in general, in a disengaged position and an arrestment of the fixing element's disengaged position is released. This signalizes to the operator that the position of the railing is not yet locked.

Particularly advantageously, the signaling element may project in its signalizing position from an operation device for moving the fixing element. In this manner, an operator can easily recognize that the fixing element is not yet in its engaged position.

Favourably, the signalizing element may be generally in alignment with an operation device for moving the fixing element if same is in an engaged position. Hereby, the operator can easily check whether the fixing element has reached its engagement position.

Preferably, the signalizing element may be a driver of the fixing element. By moving the signalizing element, also the fixing element is moved. That is, the signalizing element has integrated functions.

Particularly advantageously, the signalizing element may be rotatable relative to an operation device for moving the fixing element. Hereby, the fixing element can maintain its rotational position relative to the support although the operation device is rotated.

Particularly favourably, engagement means may be provided comprising a profile with a releasing surface opposite to a securing surface, wherein the releasing profile allows a movement of the adjustment rod in a second adjustment direction while the adjustment rod is securely locked in a first adjustment direction by means of the securing surface. This makes it possible for an operator to overcome the forces of the engagement means in the second adjustment direction and to adjust the railing quickly in this direction.

Particularly preferable, the releasing surface may be provided in a locking profile of the adjustment rod and / or in a fixing profile of a fixing element capable of being engaged with said locking profile. This allows the fixing element and the locking profile to be disengaged from each other if only one of them comprises the releasing surface. If both comprise a releasing surface, an easier disengagement is possible.

Advantageously, the locking profile may have, at the location of its releasing surface, a cross-sectional shape tapering in the second adjustment direction and / or the releasing surface of the fixing profile may be inclined at an acute angle with respect to the first adjustment direction. Hereby, the movement of the adjustment rod in the second adjustment direction is allowed in a surprisingly easy manner.

Separate protection is sought for a conveying device with at least one inventive adjustable railing device.

An embodiment of the present invention is shown in the drawing and is described below. The following is shown:
- Fig. 1: shows, schematically, an inventive conveying device comprising two adjustable railing devices,
- Fig. 2: is a partial perspective view of one adjustable railing device with an adjustment rod being locked,
- Fig. 3: is a perspective cross-sectional view of the adjustable railing device of Fig. 2,
- Fig. 4: is a partial perspective view of the adjustable railing device of Fig. 2, in a position in which the adjustment rod is disengaged, and
- Fig. 5: is a perspective cross-sectional view of the adjustable railing device according to Fig. 4.

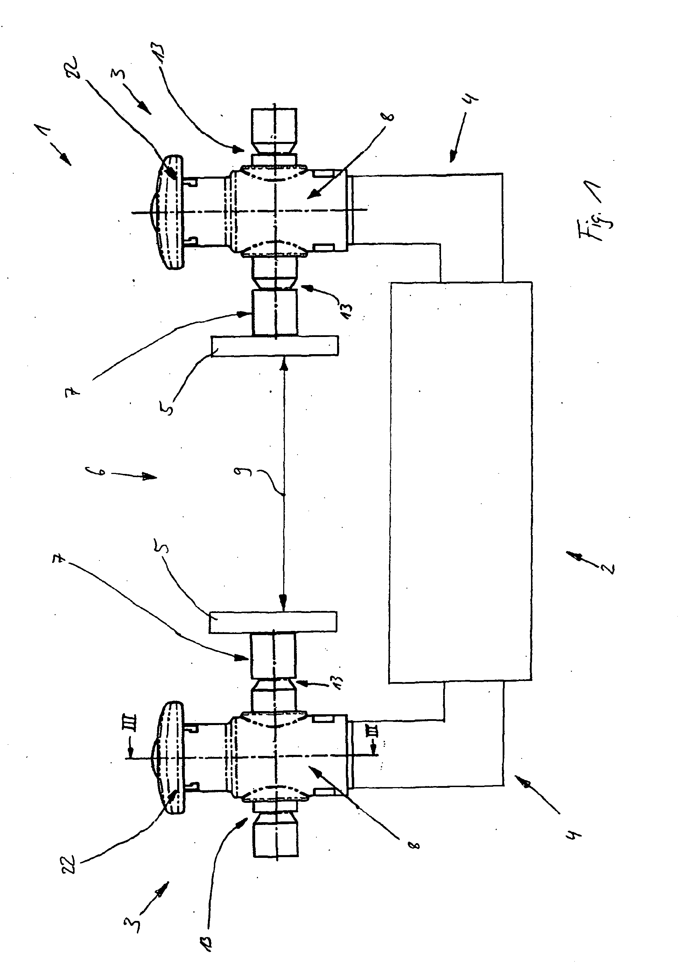

In Fig. 1, an inventive conveying device 1, for conveying goods, e.g. containers, bottles, tins and the like, is shown in a schematic manner. The conveying device 1 comprises a transportation assembly 2, e.g. of a belt-like type, by means of which the goods can be moved, two opposing adjustable railing devices 3, 3, and two mounting assemblies 4, 4, by means of which the adjustable railing devices 3, 3 are mounted on the transportation assembly 2.

Each adjustable railing device 3 has a railing 5 defining a border of a conveying path 6 of the conveying device 1, an adjustment rod 7 being connected to the railing 5, and a support 8 which supports the railing 5 and guides the adjustment rod 7. By adjusting the position of a railing 5 with respect to its support, a border of the conveying path 6 is adjusted so that a width 9 of the conveying path 6 is varied.

It is possible that only on one side of the transportation assembly 2, an adjustable railing device 3 is provided.

In the following, only one adjustable railing device is described. However, the same may analogously apply to the other adjustable railing device.

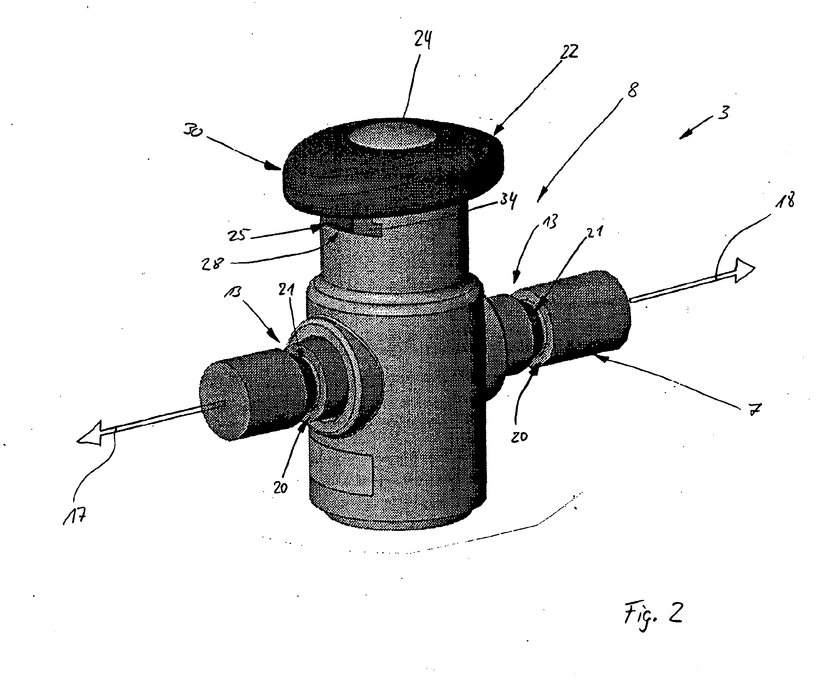

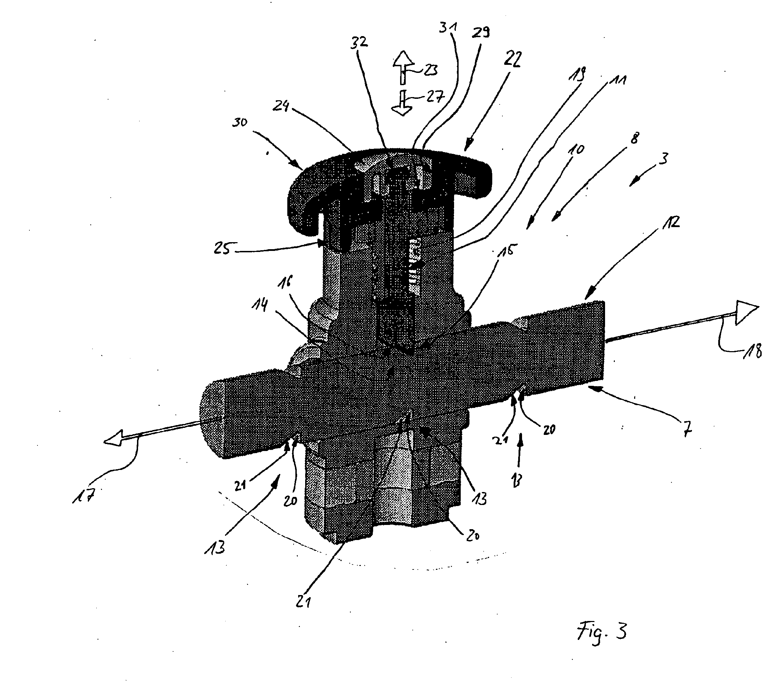

Fig. 2 shows the adjustable railing device 3 in a state in which the adjustment rod 7 is locked. The construction of the adjustable railing device 3 is shown in more detail in Fig. 3.

The adjustable railing device has engagement means 10 which are capable of releasably locking the adjustment rod's position relative to the support 8. The engagement means 10 comprise a fixing element 11 guided by the support 8 and being capable of engaging an outer surface 12 of the adjustment rod 7 for locking the position of same. Also, a locking profile 13, provided on the adjustment rod 7, belongs to the engagement means 10. In this embodiment, the adjustment rod 7 comprises three circumferentially extending locking profiles 13 and is of rotational-symmetrical shape.

The fixing element 11 can be in engagement with a locking profile 13, as shown in Figure 3, namely, by means of a fixing profile 14 which corresponds to the locking profile 13. The fixing profile 14 comprises a securing surface 15 and a releasing surface 16. The releasing surface 16 is inclined at an acute angle with respect to a first adjustment direction 17 of the adjustment rod 7. Hereby, the fixing element 11 can be disengaged from the locking profile 13 if sufficient force is applied to the adjustment rod 7 in a second adjustment direction 18 thereof. The fixing element 11 can slide out of the locking profile 13 against the force of a spring 19 surrounding the fixing element 11 and urging it towards the adjustment rod 7. The securing surface 15 is approximately traverse to the first adjustment direction 17 for securely locking the adjustment rod 7 in this direction.

Also, the locking profile 13 comprises a securing surface 20 and a releasing surface 21. At the position of the releasing surface 21 of the locking profile, the cross-sectional shape of the locking profile 13 tapers in the second adjustment direction 18, i.e. the locking profile 13 has a cone-like section. The securing surface 20 is approximately traverse to the first adjustment direction 17 for securely locking the adjustment rod 7 in this direction.

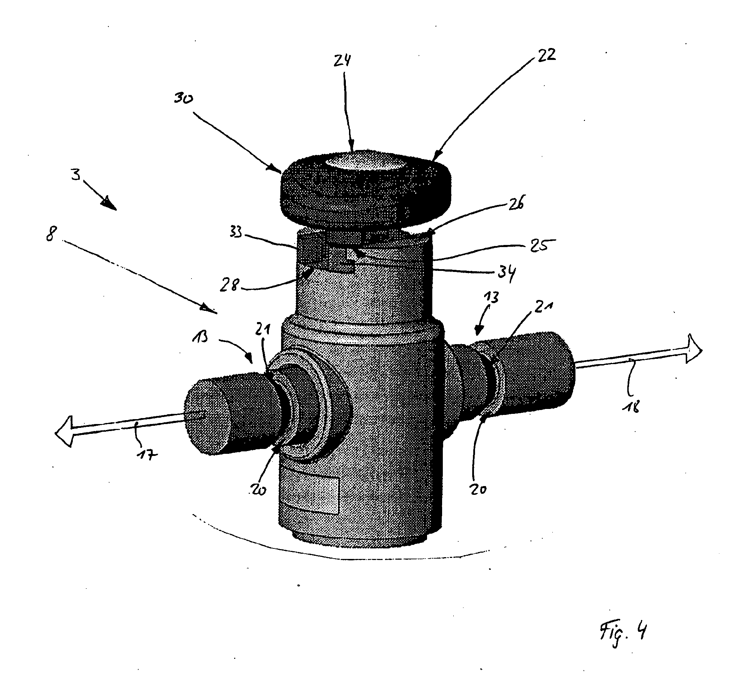

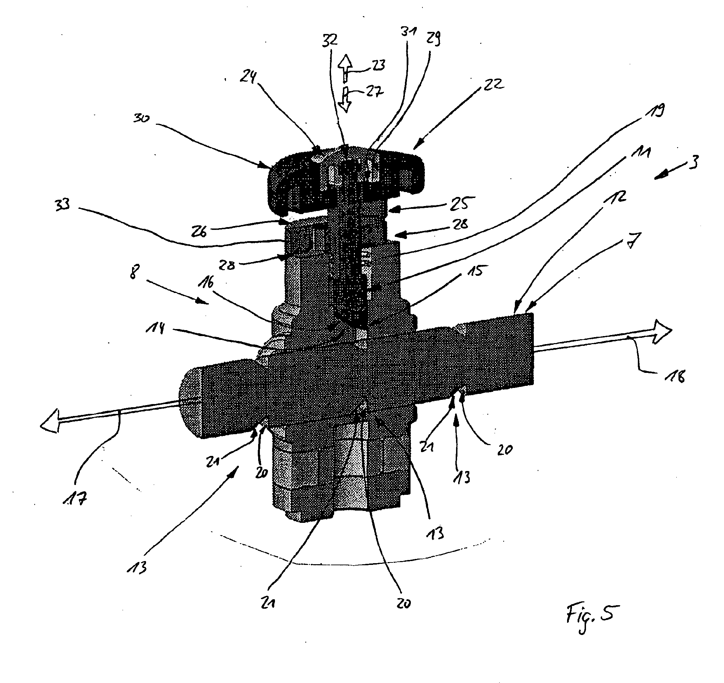

The adjustable railing device 3 comprises an operation device 22 for moving the fixing element 11 from its engaged position, as shown in Fig. 3, into a disengaged position, according to Figures 4 and 5 in its disengagement position, the adjustment rod 7 is freely moveable in both adjustment directions 17, 18. For moving the fixing element 11, an operator grasps the knob-like operation device 22 and pulls it, against the force of the spring 19, in the disengagement direction 23, i.e. in a direction away from the locking profile 13 signalizing element 24.

The fixing element 11 can be arrested in its disengagement position by means of a holding arrangement 25 of the adjustable railing device 3 by an engagement of the holding arrangement 25 with an abutment surface 26 of the support 8, as shown in Figures 4 and 5. More particularly, the holding arrangement 25 is capable of doing this in a bayonet-like manner. Namely, if the fixing element 11 is in its disengagement position, as shown in Figures 4 and 5, the holding arrangement 25 is brought into engagement with the abutment surface 26 via a rotational movement relative to the support 8. In this embodiment, the holding arrangement 25 is an extension fixed to the operation device, preferably integrally moulded with same. By rotating the operation device 22, the holding arrangement is brought into a position above the abutment surface 26, and is then held in engagement with same via the force of the spring 19 urging the fixing element 11 and, thus, the operation device 22, in the fixing element's engagement direction 27, i.e. in a direction towards the adjustment rod 7.

For releasing the arrestment of the fixing element 11, the operation device 22 is rotated back to a position in which the holding device 25 faces a recess 28 of the support 8. The holding arrangement 25 may now be inserted into the recess 28, allowing the fixing element to move towards the adjustment rod 7.

In this embodiment, two holding arrangements 25 are provided at opposing positions of the operation device. Accordingly, two corresponding recesses 28 are provided.

In each recess 28, two inserts 33, 34 are provided. Each insert 33, 34 has at least partially an L-like shape, hereby being engaged with a corresponding contour of a T-like shape of the recess 28.

If the operation device 22 is in the position as shown in Figures 2 and 3, with the holding arrangements 25 extending in their respective recess 28, a signalizing element 24 is in a signalizing position if the fixing element 11 is not yet in its engaged position with one of the locking grooves 13. This might be the case if the fixing element 11 abuts the outer surface 12 of the adjustment rod between two locking profiles 13. Hereby, the operator can easily recognize that the railing's position is not yet locked and can vary the adjustment rod's position relative to the fixing element 11 until same is engaged with one of the locking profiles 13. Then, the signalizing element 24 has the position relative to the operation device 22, as shown in Figures 2 and 3. Here, the signalizing element 24 is generally in alignment with the operation device 22. Namely, the signalizing element 24 is generally positioned within a depression 29 formed in the operation device 22 and opening towards an outside 30 thereof. The depression 29 has a generally cylindrical shape and comprises a bottom 31 through which the fixing element 11 extends.

The signalizing device 24 is in a form-fit engagement with an end 32 of the fixing element 11, in a manner in which the signalizing element 24 is rotatable relative to the fixing element but is tightly held thereon in the disengagement direction 23 as well as in the engagement direction 27.

If the fixing element 11 abuts against the adjustment rod between two locking profiles 13, the operation device 22 is movable, relative to the signalizing device 24 and the fixing element 11, into the position according to the fixing element's engagement position, as shown in Figures 2 and 3. Consequently, the signalizing device 24 now projects from the operation device 22, signalizing to the operator that the fixing element 11 is not yet in its engaged position. If the operator brings the fixing element 11 into engagement with one of the locking profiles 13, the signalizing device is retracted into the depression 29, preferably until it comes into abutment with the bottom 31 of the depression, as shown in Fig. 3. That is, the operator recognizes that the fixing element 11 is engaged.

Via the abutment with the bottom 31, the signalizing device 24 serves as a driver for the fixing element 11 when the operation device is pulled, e.g. for disengaging the fixing element 11 from a locking profile 13. As the signalizing device is rotatable relative to the operation device, the signalizing device can maintain its rotational position relative to the fixing element 11 when the disengagement position of same is arrested by rotating the operation device 22 relative to the support 8.

## Claims

1. Adjustable railing device (3) for adjusting the position of a railing (5) defining a border of a conveying path (4) on which goods, in particular bottles, are conveyed, the adjustable railing device (3) comprising an adjustment rod (7) connected to the railing (5), a support (8) guiding the adjustment rod (7), and engagement means (10) which are capable of releasably locking the adjustment rod's position relative to the support (8),
wherein the engagement means (10) are capable of securely locking the adjustment rod (7) in a first adjustment direction (17),
**characterized in that** the engagement means (10) are adapted to allow a movement of the adjustment rod (7) in a second adjustment direction (18) while the movement in the first adjustment direction (17) is securely locked.

2. Adjustable railing device according to claim 1, **characterized in that** the adjustment rod (7) has at least one locking profile (13) by means of which the position of the railing (5) with respect to the support (8) is adjusted, wherein a fixing element (11) is provided which can be in an engagement position in which it is engaged with the locking profile (13), the support (8) guiding the fixing element (11), and wherein a holding arrangement (25) is provided by means of which the fixing element (11) can be arrested in a disengagement position in which it is disengaged from the locking profile of the adjustment rod.

3. Adjustable railing device according to claim 1 or 2, **characterized in that** a holding arrangement (25) is provided, being capable of holding a fixing element (11) in a disengaged position by engaging an abutment surface (26) of the support (8).

4. Adjustable railing device according to at least one of the preceding claims, **characterized in that** a holding arrangement (25) is provided being capable of holding a fixing element (11) in a disengaged position in a bayonet-like manner.

5. Adjustable railing device according to at least one of the preceding claims, **characterized in that** the support (8) comprises a recess (28) into which a holding arrangement (25) extends if a fixing element (11) is in an engaged position.

6. Adjustable railing device according to at least one of the preceding claims, **characterized in that** an operation device, provided for moving a fixing element (11) from an engaged position into a disengaged position, is rotatable relative to the support (8) for arresting the fixing element (11).

7. Adjustable railing device according to claim 6, **characterized in that** the operation device (22) is rotatable relative to the fixing element (11).

8. Adjustable railing device according to at least one of the preceding claims, **characterized in that** the adjustable railing device (3) comprises a signalizing element (24) being in a signalizing position if a fixing element (11) is in general in a disengaged position and an arrestment of the fixing element's disengaged position is released.

9. Adjustable railing device according to claim 8, **characterized in that** the signalizing element projects in its signalizing position from an operation device (22) for moving the fixing element (11).

10. Adjustable railing device according to claim 8 or 9, **characterized in that** the signalizing element (24) is generally in alignment with an operation device (22) for moving the fixing element if same is in an engaged position.

11. Adjustable railing device according to at least one of claims 8 to 10, **characterized in that** the signalizing element (24) is a driver of the fixing element (11).

12. Adjustable railing device according to claim 11, **characterized in that** the signalizing element (24) is rotatable relative to an operation device (22) for moving the fixing element (11).

13. Adjustable railing device according to at least one of the preceding claims, **characterized in that** engagement means (11) are provided comprising a profile (13, 14) with a releasing surface (16, 21) opposite to a securing surface (15, 20), wherein the releasing surface (16, 21) allows a movement of the adjustment rod (7) in a second adjustment direction (18) while the adjustment rod (7) is securely locked in a first adjustment direction (17) by means of the securing surface (15, 20).

14. Adjustable railing device according to claim 13, **characterized in that** the releasing surface (16, 21) is provided in a locking profile (13) of the adjustment rod (7) and / or in a fixing profile (14) of a fixing element (11) capable of being engaged with said locking profile (13).

15. Adjustable railing device according to claim 13 or 14, **characterized in that** the locking profile (13) has, at the location of its releasing surface (16), a cross-sectional shape tapering in the second adjustment direction (18) and / or the releasing surface (21) of the fixing profile (14) is inclined at an acute angle with respect to the first adjustment direction (17).

16. Conveying device with at least one adjustable railing device according to at least one of the preceding claims.

## Patentansprüche

1. Justierbare Schienenvorrichtung (3) zum Justieren der Position einer Schiene (5), die einen Rand eines Förderwegs (4) definiert, auf dem Güter, insbesondere Flaschen, befördert werden, wobei die justierbare Schienenvorrichtung (3) eine Justierstange (7) umfasst, die mit der Schiene (5) verbunden ist, eine Stütze (8), die die Justierstange (7) führt, und Eingriffsmittel (10), mithilfe derer die Position der Justierstange relativ zur Stütze (8) lösbar fixiert werden kann,
wobei die Eingriffsmittel (10) dazu in der Lage sind, die Justierstange (7) in einer ersten Justierrichtung (17) zu fixieren,
**dadurch gekennzeichnet, dass** die Eingriffsmittel (10) dazu eingerichtet sind, eine Bewegung der Justierstange (7) in einer zweiten Justierrichtung (18) zu erlauben, während die Bewegung in der ersten Bewegungsrichtung (17) sicher fixiert ist.

2. Justierbare Schienenvorrichtung nach Anspruch 1, **dadurch gekennzeichnet, dass** die Justierstange (7) mindestens ein Sperrprofil (13) aufweist, mithilfe dessen die Position der Schiene (5) bezüglich der Stütze (8) justiert wird, wobei ein Fixierelement (11) bereitgestellt ist, das in eine Eingriffsstellung gebracht werden kann, in der es mit dem Sperrprofil (13) in Eingriff steht, wobei die Stütze (8) das Fixierelement (11) führt, und wobei eine Halteeinrichtung (25) bereitgestellt ist, mithilfe derer das Fixierelement (11) in einer Ausrückstellung arretiert werden kann, in der es von dem Sperrprofil der Justierstange ausgerückt ist.

3. Justierbare Schienenvorrichtung nach Anspruch 1 oder 2, **dadurch gekennzeichnet, dass** eine Halteeinrichtung (25) bereitgestellt ist, die dazu in der Lage ist, ein Fixierelement (11) durch Eingriff mit einer Anlagefläche (26) der Stütze (8) in einer ausgerückten Stellung zu halten.

4. Justierbare Schienenvorrichtung nach mindestens einem der vorhergehenden Ansprüche, **dadurch gekennzeichnet, dass** eine Halteeinrichtung (25) bereitgestellt ist, die dazu in der Lage ist, ein Fixierelement (11) bajonettartig in einer ausgerückten Stellung zu halten.

5. Justierbare Schienenvorrichtung nach mindestens einem der vorhergehenden Ansprüche, **dadurch gekennzeichnet, dass** die Stütze (8) eine Aussparung (28) aufweist, in die sich ein Halteelement (25) erstreckt, wenn sich ein Fixierelement (11) in einer eingerückten Stellung befindet.

6. Justierbare Schienenvorrichtung nach mindestens einem der vorhergehenden Ansprüche, **dadurch gekennzeichnet, dass** eine Bedienvorrichtung, die zum Bewegen eines Fixierelements (11) aus einer eingerückten Stellung in eine ausgerückte Stellung vorgesehen ist, relativ zu der Stütze (8) gedreht werden kann, um das Fixierelement (11) zu arretieren.

7. Justierbare Schienenvorrichtung nach Anspruch 6, **dadurch gekennzeichnet, dass** die Bedienvorrichtung (22) relativ zu dem Fixierelement (11) drehbar ist.

8. Justierbare Schienenvorrichtung nach mindestens einem der vorhergehenden Ansprüche, **dadurch gekennzeichnet, dass** die justierbare Schienenvorrichtung (3) ein Signalisierungselement (24) umfasst, das sich in einer Signalisierungsstellung befindet, wenn sich ein Fixierelement (11) im Allgemeinen in einer ausgerückten Stellung befindet und eine Arretierung der ausgerückten Stellung des Fixierelements gelöst ist.

9. Justierbare Schienenvorrichtung nach Anspruch 8, **dadurch gekennzeichnet, dass** das Signalisierungselement in seiner Signalisierungsstellung von der Bedienvorrichtung (22) zum Bewegen des Fixierelements (11) hervorsteht.

10. Justierbare Schienenvorrichtung nach Anspruch 8 oder 9, **dadurch gekennzeichnet, dass** das Signalisierungselement (24) mit der Bedienvorrichtung (22) zum Bewegen des Fixierelements im Allgemeinen fluchtet, wenn sich dieses in einer Eingriffsstellung befindet.

11. Justierbare Schienenvorrichtung nach mindestens einem der Ansprüche 8 bis 10, **dadurch gekennzeichnet, dass** das Signalisierungselement (24) ein Antriebsteil für das Fixierelement (11) ist.

12. Justierbare Schienenvorrichtung nach Anspruch 11, **dadurch gekennzeichnet, dass** das Signalisierungselement (24) relativ zu einer Bedienvorrichtung (22) zum Bewegen des Fixierelements (11) drehbar ist.

13. Justierbare Schienenvorrichtung nach mindestens einem der vorhergehenden Ansprüche, **dadurch gekennzeichnet, dass** Eingriffsmittel (11) bereitgestellt sind, die ein Profil (13, 14) mit einer Löseoberfläche (16, 21) gegenüber einer Sicherungsoberfläche (15, 20) aufweisen, wobei die Löseoberfläche (16, 21) eine Bewegung der Justierstange (7) in einer zweiten Justierrichtung (18) erlaubt, während die Justierstange (7) mithilfe der Sicherungsoberfläche (15, 20) in einer ersten Justierrichtung (17) sicher fixiert ist.

14. Justierbare Schienenvorrichtung nach Anspruch 13, **dadurch gekennzeichnet, dass** die Löseoberfläche (16, 21) in einem Sperrprofil (13) der Justierstange (7) und / oder in einem Fixierprofil (14) eines Fixierelements (11) bereitgestellt ist, das mit dem Sperrprofil (13) in Eingriff gebracht werden kann.

15. Justierbare Schienenvorrichtung nach Anspruch 13 oder 14, **dadurch gekennzeichnet, dass** das Sperrprofil (13) an der Position seiner Löseoberfläche (16) eine Querschnittform aufweist, die sich in der zweiten Justierrichtung (18) verjüngt und / oder die Löseoberfläche (21) des Fixierprofils (14) in einem spitzen Winkel bezüglich der ersten Justierrichtung (17) geneigt ist.

16. Fördervorrichtung mit mindestens einer justierbaren Schienenvorrichtung nach mindestens einem der vorhergehenden Ansprüche.

## Revendications

1. Dispositif de garde-corps réglable (3) pour ajuster la position d'un garde-corps (5) définissant une bordure d'un chemin de transport (4) sur lequel des marchandises, en particulier des bouteilles, sont transportées, le dispositif de garde-corps réglable (3) comprenant une tige de réglage (7) reliée au garde-corps (5), un support (8) guidant la tige de réglage (7), et un moyen de mise en prise (10) qui est susceptible de verrouiller de façon amovible la position de la tige de réglage par rapport au support (8),
dans lequel le moyen de mise en prise (10) est susceptible de verrouiller solidement la tige de réglage (7) dans une première direction de réglage (17),
**caractérisé en ce que** le moyen de mise en prise (10) est conçu pour permettre un mouvement de la tige de réglage (7) dans une seconde direction de réglage (18) tandis que le mouvement dans la première direction de réglage (17) est solidement verrouillé.

2. Dispositif de garde-corps réglable selon la revendication 1, **caractérisé en ce que** la tige de réglage (7) présente au moins un profil de verrouillage (13) au moyen duquel la position du garde-corps (5) est réglée par rapport au support (8), dans lequel un élément de fixation (11) est prévu qui peut prendre une position de mise en prise dans laquelle il est en prise avec le profil de verrouillage (13), le support (8) guidant l'élément de fixation (11), et dans lequel un agencement de maintien (25) est prévu au moyen duquel l'élément de fixation (11) peut être arrêté dans une position de désengagement dans laquelle il est désengagé du profil de verrouillage de la tige de réglage.

3. Dispositif de garde-corps réglable selon la revendication 1 ou 2, **caractérisé en ce qu'**un agencement de maintien (25) est prévu, pour maintenir un élément de fixation (11) dans une position désengagée en mettant en prise une surface de butée (26) du support (8).

4. Dispositif de garde-corps réglable selon au moins une des revendications précédentes, **caractérisé en ce qu'**un agencement de maintien (25) est prévu, pour maintenir un élément de fixation (11) dans une position désengagée d'une façon semblable à une baïonnette.

5. Dispositif de garde-corps réglable selon au moins une des revendications précédentes, **caractérisé en ce que** le support (8) comprend une partie en retrait (28) dans laquelle un agencement de maintien (25) s'étend si un élément de fixation (11) est dans une position en prise.

6. Dispositif de garde-corps réglable selon au moins une des revendications précédentes, **caractérisé en ce qu'**un dispositif de mise en oeuvre, prévu pour déplacer un élément de fixation (11) depuis une position en prise vers une position désengagée, peut tourner par rapport au support (8) pour bloquer l'élément de fixation (11).

7. Dispositif de garde-corps réglable selon la revendication 6, **caractérisé en ce que** le dispositif de mise en oeuvre (22) peut tourner par rapport à l'élément de fixation (11).

8. Dispositif de garde-corps réglable selon au moins une des revendications précédentes, **caractérisé en ce que** le dispositif de garde-corps réglable (3) comprend un élément de signalisation (24) étant dans une position de signalisation si un élément de fixation (11) est en général dans une position désengagée et qu'un dispositif d'arrêt de la position désengagée de l'élément de fixation est libéré.

9. Dispositif de garde-corps réglable selon la revendication 8, **caractérisé en ce que** l'élément de signalisation dépasse, dans sa position de signalisation, d'un dispositif de mise en oeuvre (22) pour déplacer l'élément de fixation (11).

10. Dispositif de garde-corps réglable selon la revendication 8 ou 9, **caractérisé en ce que** l'élément de signalisation (24) est globalement dans l'alignement avec un dispositif de mise en oeuvre (22) pour déplacer l'élément de fixation si ce dernier est dans une position en prise.

11. Dispositif de garde-corps réglable selon au moins une des revendications 8 à 10, **caractérisé en ce que** l'élément de signalisation (24) est un dispositif d'entraînement de l'élément de fixation (11).

12. Dispositif de garde-corps réglable selon la revendication 11, **caractérisé en ce que** l'élément de signalisation (24) peut tourner par rapport à un dispositif de mise en oeuvre (22) pour déplacer l'élément de fixation (11).

13. Dispositif de garde-corps réglable selon au moins une des revendications précédentes, **caractérisé en ce qu'**un moyen de mise en prise (11) est prévu comprenant un profil (13, 14) avec une surface de libération (16, 21) opposée à une surface de fixation (15, 20), dans lequel la surface de libération (16, 21) permet un mouvement de la tige de réglage (7) dans une seconde direction de réglage (18) tandis que la tige de réglage (7) est solidement verrouillée dans une première direction de réglage (17) au moyen de la surface de fixation (15, 20).

14. Dispositif de garde-corps réglable selon la revendication 13, **caractérisé en ce que** la surface de libération (16, 21) est prévue dans un profil de verrouillage (13) de la tige de réglage (7) et/ou dans un profil de fixation (14) d'un élément de fixation (11) susceptible d'être mis en prise avec ledit profil de verrouillage (13).

15. Dispositif de garde-corps réglable selon la revendication 13 ou 14, **caractérisé en ce que** le profil de verrouillage (13) présente, au niveau de l'emplacement de sa surface de libération (16), une forme allant en s'amincissant en coupe transversale dans la seconde direction de réglage (18) et/ou la surface de libération (21) du profil de fixation (14) est inclinée à un angle aigu par rapport à la première direction de réglage (17).

16. Dispositif de transport avec au moins un dispositif de garde-corps réglable selon au moins une des revendications précédentes.
